# FASCICULE DE BREVET EUROPEEN

(11) **EP 1 247 723 B1**
(45) Date de publication et mention de la délivrance du brevet: **05.07.2006**
(21) Numéro de dépôt: 02290728.1
(22) Date de dépôt: 22.03.2002
(51) Int. Cl.: B62D 6/04

(54) **Direction assistée munie d'un dispositif de compensation du tirage et procédé**
Mit einer Kompensationsvorrichtung gegen Seitwärtsziehen ausgerüstete Servolenkung und Verfahren
Power steering provided with a pull compensation device and a method

(30) Priorité: 26.03.2001 FR 0104027
(43) Date de publication de la demande: 09.10.2002
(73) Titulaire: Renault s.a.s., 92100 Boulogne Billancourt (FR)
(72) Inventeur: Rollet, Rémi, 91190 Gif sur Yvette (FR)

(56) Documents cités:
- EP-A- 0 822 130
- EP-A- 1 031 492

## Description

La présente invention concerne un dispositif de direction assistée hydraulique pour véhicule automobile, muni d'un dispositif de compensation du tirage et un procédé de compensation du tirage associé.

Lorsque le conducteur d'un véhicule n'exerce aucune action sur le volant, le véhicule a tendance à ne pas adopter une trajectoire rectiligne. En effet, le véhicule subit des perturbations extérieures comme le vent ou les irrégularités de la route. Par ailleurs, en l'absence de perturbations extérieures, les véhicules ont tendance à dévier de leur trajectoire soit vers la droite, soit vers la gauche : le véhicule tire à droite ou à gauche. La cause principale en est que les routes possèdent un profil bombé de façon par exemple à évacuer l'eau de pluie. Dans les pays où les véhicules roulent à droite de la chaussée, les véhicules ont tendance à dévier de leur trajectoire vers la droite.

Le tirage dû au profil de la route est permanent. Pour conserver une trajectoire rectiligne, le conducteur doit appliquer un couple opposé permanent sur le volant. Ce couple peut être important, il contribue à la fatigue du conducteur sur les longs trajets. Il apparaît avantageux de disposer d'un moyen pour compenser ce tirage permanent. Néanmoins, le système de direction d'un véhicule automobile doit permettre au conducteur de détecter les informations qui remontent du contact entre les pneus et la route. Le conducteur peut ainsi détecter une faible adhérence ou un pneu crevé qui provoquera également un tirage important. Le dispositif de compensation du tirage ne doit pas altérer ni les informations retournées au conducteur, ni le fonctionnement normal de l'assistance de direction.

On connaît par le document EP A 0 822 130 un dispositif qui permet de compenser le tirage d'un véhicule et qui s'adapte sur un système de direction assistée hydrauliquement comprenant un vérin double effet. Le dispositif crée une force qui s'oppose à l'effort de tirage par une différence de pression entre les deux chambres du vérin hydraulique alimentées par la même source d'énergie hydraulique. Le système de direction assistée comprend un réservoir, une pompe à rotation permanente alimentant une valve principale. La valve principale distribue l'alimentation en fluide sous pression entre le dispositif de compensation du tirage et une valve d'assistance qui commande l'alimentation des chambres du vérin à double effet. La valve principale alimente en priorité la valve d'assistance en énergie hydraulique. Le dispositif de compensation, comprenant un systèmes de valves pilotées par une interface recevant des données de capteurs de couple exercé sur le volant et de position du volant, peut alimenter les chambres du vérin à double effet en énergie hydraulique supplementaire, independamment de la valve d'assistance, pour créer une différence de pression entre les deux chambres du vérin qui compense l'effort de tirage. L'interface doit interpréter les données des capteurs pour déterminer le tirage.

Ce dispositif de compensation du tirage possède une architecture complexe qui rend son installation compliquée et coûteuse. Afin de déterminer les conditions de tirage, ce dispositif impose en outre de tenir compte des données fournies par des capteurs, afin de pouvoir déterminer la volonté du conducteur liée au mouvement du volant et au couple exercé sur ce volant. La présence de ces capteurs augmente de façon significative le coût du dispositif de direction assistée et complique sa mise au point.

Par ailleurs, un tel dispositif adapte automatiquement la correction d'assistance au tirage ressenti. Ainsi, en cas de crevaison lente, le conducteur ne pourra pas détecter le sous-gonflage d'un pneu par l'intermédiaire d'un couple excessif ressenti dans le volant du véhicule.

L'invention a pour objet un dispositif de direction assistée muni d'un dispositif de compensation du tirage et un procédé de compensation du tirage qui soient capables de compenser le tirage permanent dû au profil de la route.

L'invention a pour objet un dispositif de direction assistée muni d'un dispositif simple de compensation du tirage, qui peut être implanté facilement sur un véhicule disposant d'un dispositif de direction assistée hydraulique.

L'invention a également pour objet un dispositif de direction assistée muni d'un dispositif de compensation du tirage et un procédé de compensation du tirage qui n'altèrent pas le fonctionnement de l'assistance hydraulique de direction.

L'invention a enfin pour objet un dispositif de direction assistée muni d'un dispositif de compensation du tirage et un procédé de compensation du tirage qui permettent de conserver les informations fournies par les efforts transmis par le dispositif de direction.

Le dispositif de direction assistée selon un aspect de l'invention est définit par les caractéristiques de la revendication 1.

Un effort transmis par les roues, dû par exemple au tirage du véhicule, provoque un déplacement du dispositif de direction, et crée un effort sur la commande de direction. Un déplacement du dispositif de direction s'accompagne d'une circulation de fluide entrant ou sortant des premières et secondes chambres de l'actionneur hydraulique. Pour un sens de déplacement du dispositif de direction provoqué par un effort transmis par les roues, la résistance à l'écoulement du premier moyen de passage n'entraîne pas la création d'une différence de pression significative entre les deux chambres de l'actionneur hydraulique. Pour le sens de déplacement opposé, provoqué par un effort au niveau des roues, la résistance à l'écoulement du second moyen de passage offre une résistance plus élevée à l'écoulement du fluide qui impose qu'il y ait une différence de pression significative entre les deux côtés du moyen de passage, afin que le fluide puisse s'écouler. Cette différence de pression au niveau du second moyen de passage crée une différence de pression significative entre les deux chambres de l'actionneur hydraulique, et la création d'un effort qui s'oppose à l'effort qui est à l'origine du déplacement du dispositif de direction. Les résistances à l'écoulement des premier et second moyens de passage sont adaptées pour que le dispositif de direction assistée compense uniquement le tirage.

Pour un sens d'écoulement du fluide dans ladite conduite d'alimentation, le fluide doit passer par un premier clapet, pour l'autre sens d'écoulement, le fluide doit passer par le second clapet. Les deux clapets offrent des résistances à l'écoulement différentes.

Dans un mode de réalisation, les clapets sont maintenus fermés par des ressorts.

Avantageusement, les ressorts des clapets sont précontraints à des valeurs différentes. Par exemple, le ressort du premier clapet sera plus précontraint que le ressort du second clapet. Ainsi, l'ouverture du premier clapet commandant le premier sens d'écoulement se fera seulement à partir d'un certain niveau de différence de pression, plus élevé que le niveau de différence de pression nécessaire à l'ouverture du second clapet.

Dans un mode de réalisation, les ressorts des clapets possèdent des raideurs différentes. Par exemple, le ressort du premier clapet possède une raideur plus grande que le ressort du second clapet. Ainsi, l'ouverture du premier clapet commandant le premier sens d'écoulement se fera seulement à partir d'un certain niveau de différence de pression, plus élevé que le niveau de différence de pression nécessaire à l'ouverture du second clapet.

Avantageusement, la précontrainte des ressorts peut être modifiée. Cette possibilité de réglage permet d'adapter le dispositif de compensation à un véhicule particulier, ou à des conditions d'utilisation particulières.

Dans un mode de réalistation préféré, l'actionneur hydraulique comprend un vérin hydraulique à double effet, qui comprend alors deux chambres définies de part et d'autre d'un piston.

Dans un autre mode de réalisation, l'actionneur hydraulique comprend deux vérins hydrauliques, chaque vérin hydraulique comprenant une chambre.

L'invention propose également un procédé de compensation du tirage pour un dispositif de direction assistée hydraulique de véhicule automobile de type comprenant un actionneur hydraulique monté dans un circuit hydraulique et piloté par l'intermédiaire d'une commande de direction, où l'on provoque une résistance à l'écoulement du fluide dans le circuit hydraulique plus importante dans un sens d'écoulement du fluide que dans l'autre, de façon à générer un effort de compensation de tirage sur la direction assistée.

La présente invention et ses avantages seront mieux compris à l'étude de la description détaillée d'un mode de réalisation pris à titre d'exemple non-limitatif et illustrée par les dessins annexés sur lesquels :
La figure 1 est une vue de dessus schématique d'un système de direction assistée pourvu d'un dispositif de compensation du tirage selon un aspect de l'invention.
La figure 2 est une représentation de l'effort produit sur le piston lors d'un déplacement du piston provoqué par un effort transmis par les roues, et en l'absence d'action du conducteur sur la commande de direction.

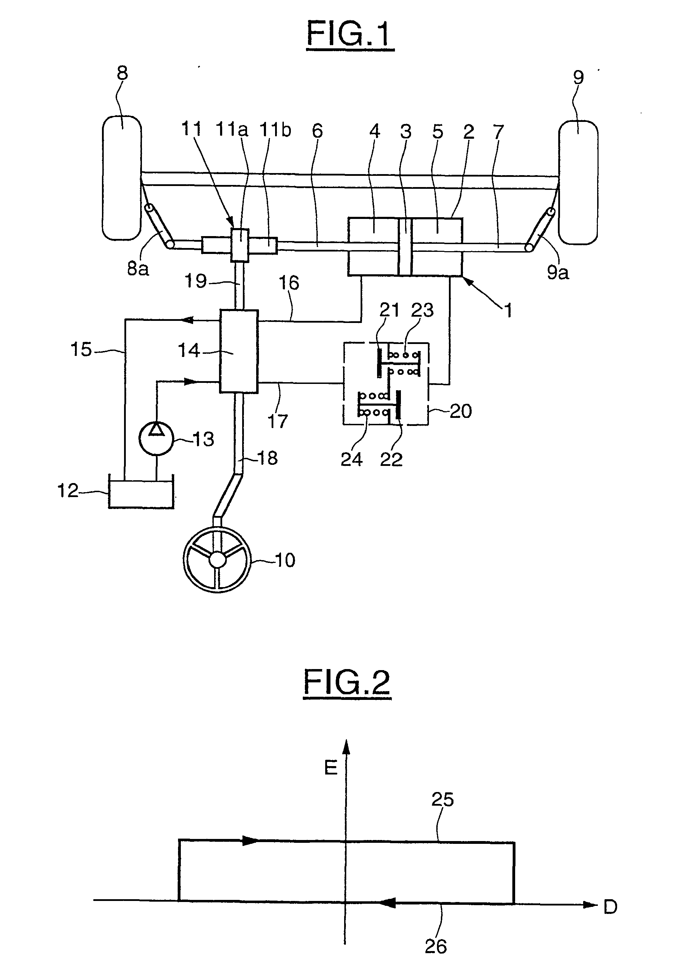

Tel qu'il est illustré schématiquement sur la figure 1, l'actionneur hydraulique comprend un vérin 1 hydraulique à double effet. Le vérin 1 comprend un corps cylindrique 2, et un piston 3 qui définit deux chambres 4 et 5 dans le corps cylindrique 2 du vérin 1. Le piston 3 est solidaire de deux tiges 6 et 7 disposées axialement de chaque côté du piston 3 et qui font saillie du corps du vérin 1. Les tiges 6 et 7 permettent d'agir sur des roues 8 et 9 d'un véhicule pour les faire pivoter selon un axe globalement vertical, au moyen de tringleries référencées respectivement 8a et 9a. Dans l'exemple illustré par la figure 1, le déplacement du piston du côté de la tige 7 permet de faire pivoter les roues 8 et 9 dans le sens trigonométrique autour d'un axe sensiblement vertical. Le déplacement du piston du côté de la tige 6 permet de faire pivoter les roues 8 et 9 dans le sens opposé au sens trigonométrique autour d'un axe sensiblement vertical.

Le dispositif de direction assistée comprend un volant 10 qui sert à commander la direction. Le dispositif de direction assistée est du type à lien mécanique, i.e. la rotation du volant 10 est mécaniquement liée à la translation du piston 3, par exemple par l'intermédiaire d'un système pignon-crémaillère 11, dont le pignon 11a est solidaire en rotation du volant 10, et dont la crémaillère 11b est solidaire de la tige 6 liée au piston 3 en translation. Le volant 10 est solidaire en rotation d'un axe 18 lui-même solidaire en rotation d'un axe 19 par l'intermédiaire d'une barre de torsion non représentée sur la figure et qui est un élément constitutif d'une valve de distribution 14. L'axe 19 est solidaire dudit pignon 11a.

Un circuit hydraulique comprend un réservoir 12, une pompe 13, la valve de distribution 14, une conduite de retour 15 disposée entre la valve de distribution 14 et le réservoir 12, une conduite 16 d'alimentation de la chambre 4 du vérin 1 entre la valve de distribution 14 et la chambre 4, et une conduite 17 d'alimentation de la chambre 5 du vérin 1, entre la valve de distribution 14 et la chambre 5 . Un dispositif 20 de compensation du tirage est disposé sur la conduite d'alimentation 17.

Le dispositif 20 de compensation du tirage comprend un clapet 21 et un clapet 22. Le clapet 22 permet la circulation du fluide dans la conduite d'alimentation 17 de la valve de distribution 14 vers la chambre 5 en fluide sous pression. Le clapet 21 permet la circulation du fluide dans la conduite d'alimentation 17 de la chambre 5 vers la valve de distribution 14. Les clapets 21 et 22 sont maintenus fermés par des ressorts respectivement 23 et 24. Dans le cas présent et pour un véhicule possédant un tirage à droite, il est avantageux que le ressort 24 possède une raideur supérieure au ressort 23.

Le réservoir 12 permet d'alimenter en fluide la pompe hydraulique 13 qui délivre du fluide sous pression vers la valve de distribution 14. La valve de distribution 14 est commandée par l'intermédiaire des positions relatives du volant 10 et du piston 3. La valve de distribution 14 comprend une barre de torsion non représentée sur le dessin, dont une extrémité est solidaire de l'axe 18 et l'autre extrémité est solidaire de l'axe 19. La barre de torsion est par exemple un axe de moindre diamètre. L'application d'un couple entre sa première et sa deuxième extrémité provoque une rotation axiale significative d'une extrémité par rapport à l'autre.

Dans la situation où le conducteur n'exerce aucun effort sur le volant 10, et lorsque le véhicule roule en ligne droite et possède un tirage vers la droite, les roues 8 et 9 auront tendance à pivoter vers la droite. Elles exercent un effort sur le piston 3 qui tend à le faire translater vers la gauche, ce qui nécessite l'alimentation de la chambre 5 en fluide. Cette alimentation n'est possible que si la différence de pression entre la chambre 5 et la conduite 17 d'alimentation est suffisante pour provoquer l'ouverture du clapet 22.

Comme le conducteur n'exerce pas d'action sur le volant, les conduites 16 et 17, et la chambre 4 sont à la même pression. Le mouvement du piston 3 vers la gauche, provoqué par les roues 8 et 9, implique que la différence de pression entre la chambre 5 et la chambre 4 est sensiblement égale à la différence de pression suffisante pour provoquer l'ouverture du clapet 22, la pression dans la chambre 4 étant supérieure, ce qui signifie que la différence de pression provoquée entre les deux chambres crée un effort qui s'oppose au déplacement du piston induit par le tirage.

La figure 1 illustre le cas d'un véhicule possédant un tirage à droite. Le tarage du clapet 22 est dans ce cas supérieur au tarage du clapet 21.

Le tarage du clapet 22 est adapté pour que l'effort dû au tirage, transmis par les roues sur le piston 3, provoque sensiblement entre les deux chambres 4 et 5 du vérin 1 la différence de pression nécessaire pour ouvrir le clapet 22. Ainsi, une action du conducteur sur le volant en vue de tourner à droite n'est pas perturbée par la présence du clapet 22, dont l'ouverture est essentiellement assurée par l'effort sur le piston dû au tirage.

Le tarage du clapet 21 est adapté pour que la présence du clapet 21 ne perturbe pas le fonctionnement normal du dispositif de direction, notamment lorsque le conducteur agit sur le volant en vue de tourner vers la gauche. De préférence, le clapet 21 possède une faible valeur de tarage.

Dans le cas où d'un véhicule possèdant un tirage vers la gauche, le clapet 21 devra posséder un tarage plus important que le clapet 22.

Dans un autre mode de réalisation selon un aspect de l'invention non illustré sur la figure 1, on peut disposer le dispositif 20 de compensation du tirage sue la conduite 16. Dans le cas où le véhicule possède un tirage vers la droite, le clapet 22 doit être disposé de façon à permettre la circulation du fluide de la chambre 4 vers la valve de distribution 14, le clapet 21 doit être disposé de façon à permettre la circulation du fluide de la valve de distribution 14 vers la chambre 5. Dans le cas où le véhicule possède un tirage vers la gauche, le clapet 22 doit être disposé de façon à permettre la circulation du fluide de la valve de distribution 14 vers la chambre 4, le clapet 21 doit être disposé de façon à permettre la circulation du fluide de la chambre 4 vers la valve de distribution 14.

Le dispositif de direction peut posséder une architecture différente. Le dispositif 20 de compensation du tirage peut être adapté à tous les types d'architecture, car il s'adapte facilement sur une conduite d'alimentation. Il suffit alors de prêter attention à l'agencement des clapets dans le cas particulier du véhicule considéré.

La figure 2 est un graphique illustrant les efforts créés sur le piston 3 par la différence de pression en fonction du déplacement du piston 3 provoqué par un effort transmis par les roues, en l'absence d'action du conducteur sur la commande de direction. Le graphique représente un cycle de déplacement du piston 3 de la figure 1 comprenant un déplacement 26 vers la droite puis un déplacement 25 vers la gauche.

Lors du déplacement 25 vers la gauche, qui correspond à une rotation des roues 8 et 9 vers la gauche, le fluide sort de la chambre, 5 via la conduite d'alimentation 17, vers la valve de distribution 14. Le fluide passe par le clapet 21. La raideur du ressort 23 permet au clapet 21 de s'ouvrir pour une faible différence de pression. La différence de pression très faible ne génère pas d'effort significatif sur le piston 3.

Lors du déplacement 26 vers la droite, qui correspond à une rotation des roues 8 et 9 vers la droite, le fluide pénètre dans la chambre 5 via la conduite d'alimentation 17, en provenance de la valve de distribution 14. Le fluide passe par le clapet 22. La raideur du ressort 24 permet au clapet 22 de s'ouvrir pour une différence de pression déterminée, qui provoque une différence de pression significative entre les deux chambres 4 et 5 du vérin 1, la pression dans la chambre 4 étant supérieure. Le déplacement du piston 3 vers la gauche provoque un effort constant dû à la différence de pression imposée par le clapet 22, et qui s'oppose à l'effort dû au tirage.

Avantageusement, on peut prévoir un dispositif de réglage de la précontrainte appliquée sur les ressorts 23 et 24, afin de pouvoir adapter l'effort provoqué par le dispositif de compensation du tirage au véhicule considéré.

L'invention permet donc d'obtenir un dispositif de compensation du tirage simple, économique et qui peut être adapté sur les véhicules munis d'une assistance de direction hydraulique. Le dispositif de compensation du tirage provoque un effort qui s'oppose sensiblement à l'effort dû au tirage transmis par les roues. Ainsi, le dispositif de compensation du tirage ne perturbe pas le fonctionnement normal du dispositif de direction, sans filtrer notamment les informations perçues par le conducteur via la commande de direction.

## Revendications

1. Dispositif de direction assistée hydraulique pour véhicule automobile comprenant un circuit hydraulique d'alimentation en fluide sous pression, un actionneur hydraulique (1) comprenant deux chambres, une valve de distribution (14) pilotée par une commande de direction, ladite valve de distribution (14) commandant le passage du fluide dans une première chambre (4) de l'actionneur hydraulique (1) par l'intermédiaire d'une première conduite (16) d'alimentation et une seconde chambre (5) de l'actionneur hydraulique (1) par l'intermédiaire d'une seconde conduite (17) d'alimentation, comprenant un dispositif de compensation, **caractérisé par le fait que** le dispositif (20) de compensation du tirage est disposé sur l'une des conduites (16 ou 17) d'alimentation de la première ou de la seconde chambre (4 ou 5) de l'actionneur hydraulique (1), le dispositif de compensation comprenant un premier moyen de passage du fluide, sous forme d'un clapet (21), dans un premier sens, et un second moyen de passage du fluide, sous forme d'un clapet (22), dans le sens opposé au premier sens, les premier et second moyens de passage opposant des résistances différentes à l'écoulement du fluide.

2. Dispositif de direction assistée selon la revendication 2, **caractérisé par le fait que** les premier et second moyens de passage sont des clapets à ressort (21 et 22).

3. Dispositif de direction assistée selon la revendication 3, **caractérisé par le fait que** les premier et second moyens de passage comprennent des ressorts (23 et 24) précontraints à des valeurs différentes.

4. Dispositif de direction assistée selon la revendication 3, **caractérisé par le fait que** les premiers et second moyens de passage comprennent des ressorts (23 et 24) de raideurs différentes.

5. Dispositif de direction assistée selon les revendications 4 ou 5, **caractérisé par le fait que** la précontrainte des ressorts (23 et 24) peut être modifiée.

6. Dispositif de direction assistée selon l'une quelconque des revendications précédentes, **caractérisé par le fait que** l'actionneur hydraulique (1) comprend deux vérins hydrauliques.

7. Dispositif de direction assistée selon l'une quelconque des revendications 1 à 6, **caractérisé par le fait que** l'actionneur hydraulique est un vérin hydraulique à double effet.

8. Procédé de compensation du tirage pour un dispostif de direction assistée hydraulique de véhicule automobile de type comprenant un actionneur hydraulique monté dans un circuit hydraulique et piloté par l'intermédiaire d'une commande de direction, **caractérisé par le fait que** l'on provoque une résistance à l'écoulement du fluide dans le circuit hydraulique plus importante dans un sens d'écoulement du fluide que dans l'autre, de façon à générer un effort de compensation de tirage sur la direction assistée.

## Claims

1. A hydraulic assisted steering device for an automobile vehicle comprising a hydraulic supply circuit for pressurised fluid, a hydraulic actuator (1) comprising two chambers, a distribution valve (14) driven by a steering command, the distribution valve (14) controlling the passage of the fluid into a first chamber (4) of the hydraulic actuator (1) by means of a first supply duct (16) and into a second chamber (5) of the hydraulic actuator (1) by means of a second supply duct (17), comprising a compensation device, **characterised in that** the drift compensation device (20) is disposed on one of the supply ducts (16 or 17) of the first or the second chamber (4 or 5) of the hydraulic actuator (1), the compensation device comprising a first passage means, in the form of a valve (21), adapted to allow the fluid to pass in a first direction; and a second passage means, in the form of a valve (22), adapted to allow the fluid to pass in the direction opposite to the first direction, the first and second passage means providing different resistances to the flow of fluid.

2. An assisted steering device as claimed in claim 1, **characterised in that** the first and second passage means are spring mounted valves (21 and 22).

3. An assisted steering device as claimed in claim 2, **characterised in that** the first and second passage means comprise springs (23 and 24) preloaded to different values.

4. An assisted steering device as claimed in claim 3, **characterised in that** the first and second passage means comprise springs (23 and 24) of different stiffness.

5. An assisted steering device as claimed in claims 3 or 4, **characterised in that** the preloading of the springs (23 and 24) may be modified.

6. An assisted steering device as claimed in any one of the preceding claims, **characterised in that** the hydraulic actuator (1) comprises two hydraulic jacks.

7. An assisted steering device as claimed in any one of claims 1 to 6, **characterised in that** the hydraulic actuator is a double-acting hydraulic jack.

8. A method of compensating drift for a hydraulic assisted steering device of an automobile vehicle of the type comprising a hydraulic actuator mounted in a hydraulic circuit and driven by means of a steering command, **characterised in that** a resistance to the flow of fluid in the hydraulic circuit, which is greater in one direction of flow of fluid than in the other, is caused in order to generate a drift compensation force on the assisted steering.

## Patentansprüche

1. Hydraulische Servolenkvorrichtung für ein Kraftfahrzeug, aufweisend einen hydraulischen Versorgungskreislauf mit Fluid unter Druck, einen hydraulischen Betätiger (1), welcher zwei Kammern aufweist, ein Verteilungsventil (14), welches durch eine Lenksteuerung gesteuert wird, wobei das Verteilungsventil (14) den Durchgang des Fluids in eine erste Kammer (4) des hydraulischen Betätigers (1) über eine erste Versorgungsleitung (16) und in eine zweite Kammer (5) des hydraulischen Betätigers (1) über eine zweite Versorgungsleitung (17) steuert, aufweisend eine Kompensationsvorrichtung, **dadurch gekennzeichnet, dass** die Vorrichtung (20) zur Kompensation des Seitwärtsziehens auf einer der Versorgungsleitungen (16 oder 17) der ersten oder der zweiten Kammer (4 oder 5) des hydraulischen Betätigers (1) angeordnet ist, wobei die Kompensationsvorrichtung ein erstes Mittel für den Durchlass des Fluids in Form eines Sperrventils (21) in einer ersten Richtung und ein zweites Mittel für den Durchlass des Fluids in Form eines Sperrventils (22) in der Richtung, welche der ersten Richtung gegenüberliegt, aufweist, wobei das erste und das zweite Durchlassmittel dem Strömen des Fluids verschiedene Widerstände entgegensetzen.

2. Servolenkvorrichtung nach Anspruch 1, **dadurch gekennzeichnet, dass** das erste und das zweite Durchlassmittel Sperrventile mit einer Feder (21 und 22) sind.

3. Servolenkvorrichtung nach Anspruch 2, **dadurch gekennzeichnet, dass** das erste und das zweite Durchlassmittel Federn (23 und 24) aufweisen, welche auf verschiedene Werte vorgespannt sind.

4. Servolenkvorrichtung nach Anspruch 3, **dadurch gekennzeichnet, dass** das erste und das zweite Durchlassmittel Federn (23 und 24) von verschiedener Steifigkeit aufweisen.

5. Servolenkvorrichtung nach Anspruch 4 oder 5, **dadurch gekennzeichnet, dass** die Vorspannung der Federn (23 und 24) verändert werden kann.

6. Servolenkvorrichtung nach irgendeinem der vorangegangenen Ansprüche, **dadurch gekennzeichnet, dass** der hydraulische Betätiger (1) zwei hydraulische Zylinder aufweist.

7. Servolenkvorrichtung nach irgendeinem der Ansprüche 1 bis 6, **dadurch gekennzeichnet, dass** der hydraulische Betätiger ein doppeltwirkender hydraulischer Zylinder ist.

8. Verfahren zur Kompensation des Seitwärtsziehens für eine hydraulische Servolenkvorrichtung eines Kraftfahrzeugs von der Art, welche einen hydraulischen Betätiger aufweist, der in einem hydraulischen Kreislauf montiert ist und welcher über eine Lenksteuerung gesteuert wird, **dadurch gekennzeichnet, dass** man einen Widerstand gegen das Strömen des Fluids in dem hydraulischen Kreislauf hervorruft, der in einer Strömungsrichtung des Fluids größer ist als in der anderen, derart, um eine Kraft zur Kompensation des Seitwärtsziehens auf die Servolenkung zu erzeugen.
